(19) Europäisches Patentamt / European Patent Office / Office européen des brevets

(11) **EP 3 605 907 A1**

(12) **EUROPEAN PATENT APPLICATION**
published in accordance with Art. 153(4) EPC

(43) Date of publication:
**05.02.2020 Bulletin 2020/06**

(21) Application number: **17908947.9**

(22) Date of filing: **10.05.2017**

(51) Int Cl.:
**H04L 1/06** (2006.01)　　　**H04L 27/233** (2006.01)

(86) International application number:
**PCT/JP2017/017692**

(87) International publication number:
**WO 2018/207281 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• **SASAKI, Satoshi**
**Tokyo 100-8310 (JP)**
• **SANO, Hiroyasu**
**Tokyo 100-8310 (JP)**
• **MASUDA, Shinji**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **TRANSMISSION DEVICE, BASE STATION DEVICE, AND WIRELESS COMMUNICATION SYSTEM**

(57)　A transmitter (10) according to the present invention includes: a mapping unit (11) that generates modulation symbols by modulating a transmission bit sequence; a DSTBC coding unit (12) that generates coded symbols by performing differential space-time block coding on the modulation symbols; a code conversion unit (13) that performs, on the coded symbols, a conversion process selected from among a plurality of conversion processes; and an antenna (16, 17) that transmits the coded symbols after the conversion process.

## FIG.1

**Description**

Field

The present invention relates to a transmitter, a base station device, and a wireless communication system that perform transmission using differential space-time block coding (DSTBC).

Background

As a wireless communication technique for preventing deterioration in communication performance due to fading, a diversity technique in which transmission is performed using a plurality of transmission paths with different transmission path characteristics is used. A known example of a scheme for a transmission diversity technique in which transmission is performed using a plurality of antennas on the transmission side is a space-time block coding (STBC) scheme in which a plurality of orthogonal sequences is generated using STBC and transmitted through different antennas. In the STBC scheme, the receiver can achieve full diversity.

In the STBC scheme, a plurality of symbols is treated as one block. Generally, in the STBC scheme, the number of antennas is associated with the number of symbols treated as one block. For example, in a case where the number of antennas is two in the STBC scheme, one block includes two symbols. In the STBC scheme, the receiver needs to estimate transmission path information in order to demodulate the received signal, but can obtain the effect of diversity by the STBC scheme.

As a scheme that does not require estimation of transmission path information, Non Patent Literature 1 discloses a DSTBC scheme in which differential coding is performed on an STBC block basis. For example, DSTBC transmission with two antennas involves generating a $2\times2$ matrix using two symbols as one block, and performing differential coding for the matrices of two consecutive blocks. In the DSTBC scheme, the receiver performs demodulation by generating a $2\times2$ matrix with the two symbols received and performing differential decoding for the matrices for two blocks.

Citation List

Non Patent Literature

Non Patent Literature 1: V. Tarokh and H. Jafarkhani, "A Differential Detection Scheme for Transmit Diversity", IEEE Journal on Selected Areas in Communications, Vol. 18, pp. 1169-1174, July 2000.

Summary

Technical Problem

In a wireless communication system in which a plurality of base stations is installed to provide communication between base stations and mobile stations, it is desirable to eliminate an area where a mobile station cannot receive a signal from a base station. Therefore, base stations are installed such that the communication areas of the base stations, that is, the ranges in which signals from the base stations can be received, overlap each other. Therefore, when identical signals are transmitted from a plurality of base stations at the same frequency, a mobile station located in the overlap between communication areas undergoes what is called beat interference, i.e. a reduction in the power of the received signals caused by the antiphase combination of the reception signals. The beat interference is problematic because the communication performance is lowered.

Further, in a wireless communication system, it is desirable to expand the communication area of one base station so that the range for providing communication can be covered with a smaller number of base stations. A possible method for expanding the communication area of one base station is to increase the number of transmission antennas. However, in the DSTBC transmission diversity technique, increasing the number of antennas leads to an increase in the number of symbols included in one block, that is, the number of rows and columns of a matrix to be generated. As a result, there is a problem in that the amount of processing exponentially increases.

The present invention has been made in view of the above, and an object thereof is to provide a transmitter capable of preventing a reduction in the power of reception signals even when identical signals are transmitted from a plurality of base stations at the same frequency.

Solution to Problem

In order to solve the problems described above and to achieve the object, a transmitter according to the present invention includes: a modulation unit that generates modulation symbols by modulating a transmission bit sequence; and a coding unit that generates coded symbols by performing differential space-time block coding on the modulation symbols. The transmitter according to the present invention further includes: a conversion unit that performs, on the coded symbols, a conversion process selected from among a plurality of conversion processes; and an antenna that transmits the coded symbols after the conversion process.

Advantageous Effects of Invention

The transmitter according to the present invention can achieve the effect of preventing a reduction in the power of reception signals even when identical signals are transmitted from a plurality of base stations at the same frequency.

Brief Description of Drawings

FIG. 1 is a diagram illustrating an exemplary configuration of a transmitter according to a first embodiment.
FIG. 2 is a diagram illustrating an exemplary configuration of a receiver according to the first embodiment.
FIG. 3 is a diagram illustrating processing circuitry according to the first embodiment.
FIG. 4 is a diagram illustrating an exemplary configuration of processing circuitry including a processor according to the first embodiment.
FIG. 5 is a flowchart illustrating an exemplary procedure in the transmitter according to the first embodiment.
FIG. 6 is a diagram illustrating QPSK-based signal point arrangement according to the first embodiment.
FIG. 7 is a diagram illustrating an exemplary rule for conversion from $a_k$, $b_k$, $C_k$, and $d_k$ to $e_k$, $f_k$, $m_k$, and $n_k$ according to the first embodiment.
FIG. 8 is a diagram illustrating an exemplary rule for conversion from $a_k$, $b_k$, $C_k$, and $d_k$ to $p_k$, $q_k$, $u_k$, and $v_k$ according to the first embodiment.
FIG. 9 is a diagram illustrating an example of a wireless communication system according to the first embodiment.
FIG. 10 is a diagram illustrating an example of pattern grouping according to the first embodiment.
FIG. 11 is a diagram illustrating an exemplary configuration of a wireless communication system according to a second embodiment.
FIG. 12 is a diagram illustrating an exemplary configuration of a base station device according to the second embodiment.

Description of Embodiments

Hereinafter, a transmitter, a base station device, and a wireless communication system according to embodiments of the present invention will be described in detail based on the drawings. The present invention is not limited to the embodiments.

First Embodiment.

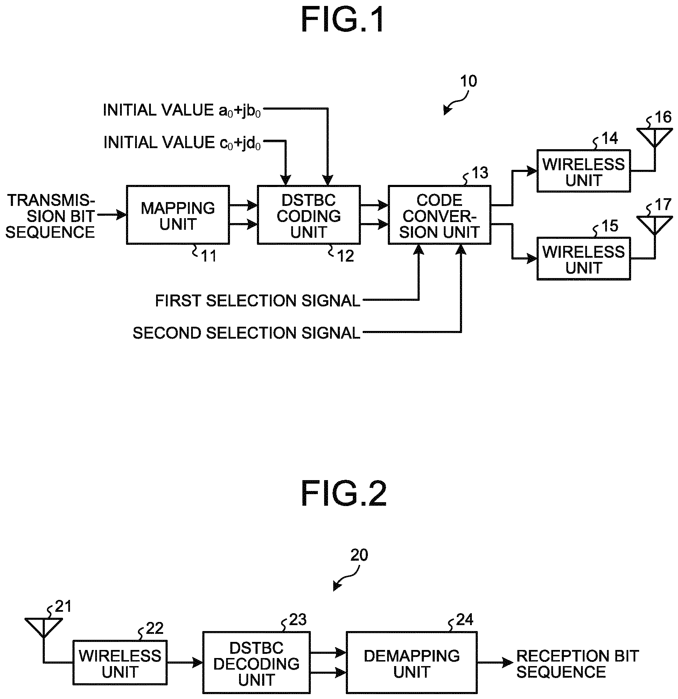

FIG. 1 is a diagram illustrating an exemplary configuration of a transmitter 10 according to the first embodiment of the present invention. As illustrated in FIG. 1, the transmitter 10 according to the present embodiment includes a mapping unit 11, a DSTBC coding unit 12, a code conversion unit 13, wireless units 14 and 15, and antennas 16 and 17. The transmitter 10 generates a block according to the DSTBC scheme, and transmits the generated block. The transmitter 10 is provided, for example, in a communication device that performs wireless communication.

The mapping unit 11 modulates a transmission bit sequence to generate modulation symbols, and outputs the modulation symbols to the DSTBC coding unit 12. That is, the mapping unit 11 is a modulation unit that generates modulation symbols by modulating a transmission bit sequence. Specifically, the mapping unit 11 maps transmission bits as modulation symbols on the complex plane. As a modulation scheme for the mapping unit 11, for example, quadrature phase shift keying (QPSK) can be used. However, the modulation scheme in the present embodiment is not limited to QPSK and may be any scheme. A transmission bit sequence may be a bit sequence representing information to be transmitted, or may be a bit sequence obtained through error correction coding of a bit sequence representing information to be transmitted.

The DSTBC coding unit 12 performs differential space-time coding, that is, DSTBC coding, on the modulation symbols, and outputs, to the code conversion unit 13, a DSTBC block including the coded symbols, i.e. the modulation symbols subjected to DSTBC coding. That is, the DSTBC coding unit 12 is a coding unit that generates coded symbols by performing differential space-time block coding on modulation symbols. The code conversion unit 13 performs conversion processing on the DSTBC block according to the rule described later, divides the DSTBC block subjected to conversion processing into two, outputs one of the two to the wireless unit 14, and outputs the other to the wireless unit 15. The code conversion unit 13 is a conversion unit that performs, on coded symbols, a conversion process selected from among a plurality of conversion processes. Details of the operation in the code conversion unit 13 will be described later.

The wireless units 14 and 15 perform, on the signals input from the code conversion unit 13, transmission processing such as waveform shaping, digital-analog (DA) conversion, up-conversion, and amplification processing, and output the signals subjected to transmission processing to the antennas 16 and 17, respectively. That is, the antennas 16 and 17 transmit the coded symbols subjected to conversion processing by the code conversion unit 13. The signals transmitted from the antennas 16 and 17 have the same frequency. As the transmission processing in the wireless units 14 and 15, any type of processing may be performed, and commonly performed transmission processing can be used. The antennas 16 and 17 transmit the signals respectively input from the wireless units 14 and 15 as wireless signals. Although the number of transmission antennas is two in the present embodiment, the number of transmission antennas is not limited to this. That is, the transmitter 10 may include a plurality of antennas or one antenna.

FIG. 2 is a diagram illustrating an exemplary configuration of a receiver 20 according to the present embodiment. As illustrated in FIG. 2, the receiver 20 includes an antenna 21, a wireless unit 22, a DSTBC decoding unit 23, and a demapping unit 24. The receiver 20 is capable of receiving a signal from the transmitter 10.

The antenna 21 receives a wireless signal. The wireless unit 22 performs, on the signal received by the antenna 21, reception processing such as amplification, down-conversion, analog-digital (AD) conversion, and waveform shaping, and outputs the signal subjected to reception processing to the DSTBC decoding unit 23. The DSTBC decoding unit 23 performs differential space-time decoding, that is, DSTBC decoding, on the reception symbols, i.e. the signal subjected to reception processing, and outputs the DSTBC-decoded reception symbols to the demapping unit 24. The demapping unit 24 demodulates the reception symbols input from the DSTBC decoding unit 23 by performing the reverse process of the mapping in the transmitter 10, and outputs the bit sequence obtained through demodulation as a reception bit sequence.

As the receiver 20, a general receiver that receives transmission diversity signals using the DSTBC scheme can be used. Although FIG. 2 depicts a receiver including one antenna as an example of the receiver 20, the number of antennas of the receiver is not limited to one. The configuration and operation of a receiver including two or more antennas are similar to those of a general receiver that receives transmission diversity signals using the DSTBC scheme. Note that the following description of the operation deals with the case of one antenna.

Next, a hardware configuration of the transmitter 10 according to the present embodiment will be described. The wireless units 14 and 15 in the transmitter 10 are implemented by communication circuitry. The mapping unit 11, the DSTBC coding unit, and the code conversion unit 13 are implemented by processing circuitry. The processing circuitry may be dedicated hardware or processing circuitry including a processor.

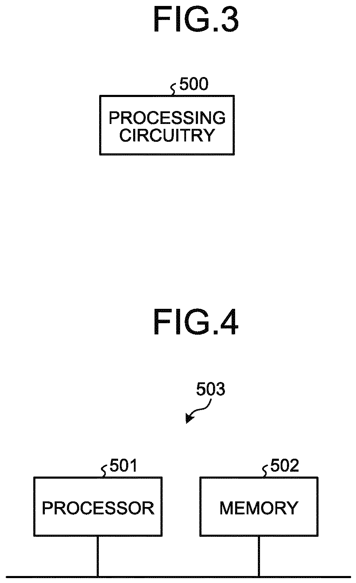

In a case where the processing circuitry for implementing the mapping unit 11, the DSTBC coding unit, and the code conversion unit 13 is dedicated hardware, this processing circuitry is processing circuitry 500 illustrated in FIG. 3. FIG. 3 is a diagram illustrating the processing circuitry 500 according to the present embodiment. For example, the processing circuitry 500 is a single circuit, a composite circuit, a programmed processor, a parallel programmed processor, an application specific integrated circuit (ASIC), a field-programmable gate array (FPGA), or a combination thereof.

In a case where the processing circuitry for implementing the mapping unit 11, the DSTBC coding unit, and the code conversion unit 13 is processing circuitry including a processor, this processing circuitry is, for example, processing circuitry 503 illustrated in FIG. 4. FIG. 4 is a diagram illustrating an exemplary configuration of processing circuitry including a processor. The processing circuitry 503 illustrated in FIG. 4 includes a processor 501 and a memory 502. The processor 501 is a central processing unit (CPU), a microprocessor, or the like. The memory 502 is, for example, a nonvolatile or volatile semiconductor memory such as a random access memory (RAM), a read only memory (ROM), or a flash memory, a magnetic disk, or the like.

In a case where the mapping unit 11, the DSTBC coding unit, and the code conversion unit 13 are implemented by the processing circuitry 503, a program for implementing the functions for implementing the mapping unit 11, the DSTBC coding unit, and the code conversion unit 13 is stored in the memory 502. The processor 501 executes the program to implement the mapping unit 11, the DSTBC coding unit 12, and the code conversion unit 13. The memory 502 is also used as a storage area when the processor 501 executes the program. Alternatively, the mapping unit 11, the DSTBC coding unit, and the code conversion unit 13 may be implemented in part by dedicated hardware, namely the processing circuitry 500, and the rest may be implemented by the processing circuitry 503.

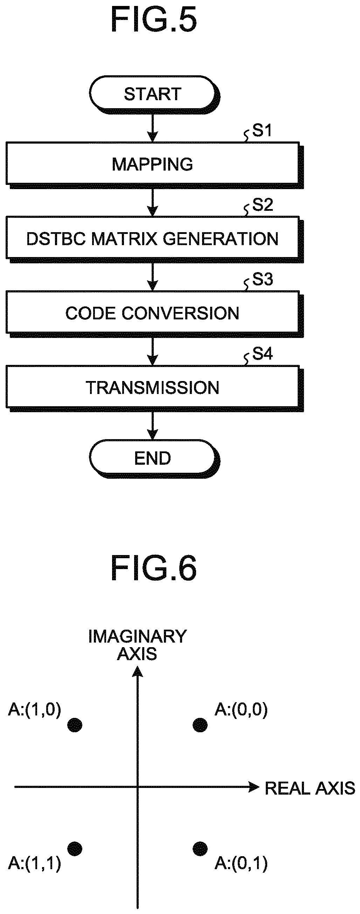

Next, the operation of the present embodiment will be described. First, the operation of the transmitter 10 will be described. FIG. 5 is a flowchart illustrating an exemplary procedure in the transmitter 10 according to the present embodiment. As illustrated in FIG. 5, the transmitter 10 maps a transmission bit sequence (step S1). Specifically, the mapping unit 11 maps each symbol of the transmission bit sequence to a modulation symbol represented in the complex plane, and outputs the modulation symbols to the DSTBC coding unit 12. In a case where QPSK is used as the modulation scheme, the mapping unit 11 arranges one symbol composed of two bits of the transmission bit sequence at a signal point in the complex plane for QPSK modulation symbols. FIG. 6 is a diagram illustrating QPSK-based signal point arrangement. In FIG. 6, the horizontal axis indicates the real axis, and the vertical axis indicates the imaginary axis. In FIG. 6, A:(1, 0) indicates the signal point of the modulation symbol when two bits of the transmission bit sequence are (1, 0), and A:(0, 0) indicates the signal point of the modulation symbol when two bits of the transmission bit sequence are (0, 0). In FIG. 6, A:(1, 1) indicates the signal point of the modulation symbol when two bits of the transmission bit sequence are (1, 1), and A:(0, 1) indicates the signal point of the modulation symbol when two bits of the transmission bit sequence are (0, 1).

Referring back to FIG. 5, after step S1, the DSTBC coding unit 12 of the transmitter 10 generates a DSTBC matrix using the modulation symbols input from the mapping unit 11 (step S2). Specifically, using two modulation symbols as one block, the DSTBC coding unit 12 generates a modulation symbol matrix S (bold) [k] corresponding to the modulation symbols of one block, and generates a DSTBC matrix C (bold) [k] according to Formula (1) below. That is, the DSTBC coding unit 12 multiplies the modulation symbol matrix S (bold) [k] by a DSTBC matrix C [k-1] corresponding to the previous block to generate the DSTBC matrix C (bold) [k]. Here, k is an integer indicating a block number. Note that the DSTBC matrix C (bold) [k-1] is the DSTBC matrix for the previous block. The DSTBC coding unit 12 outputs the DSTBC matrix C (bold) [k] to the code conversion unit 13.

$$[\text{Formula } 1]$$

$$\mathbf{C}[k] = \mathbf{S}[k]\mathbf{C}[k - 1]$$

The modulation symbol matrix S (bold) [k] can be expressed by Formula (2) below, where $x_k+jy_k$ and $z_k+jw_k$ represent the two modulation symbols corresponding to the k-th block. Here, j represents an imaginary unit. In addition, $x_k$ and $z_k$ are the real parts of the modulation symbols corresponding to the k-th block, and $y_k$ and $w_k$ are the imaginary parts of the modulation symbols corresponding to the k-th block.

$$[\text{Formula } 2]$$

$$\mathbf{S}[k] = \begin{bmatrix} x_k + jy_k & z_k + jw_k \\ -z_k + jw_k & x - jy_k \end{bmatrix}$$

The DSTBC matrix C (bold) [k] can be expressed by Formula (3) below, where $a_k+jb_k$ and $c_k+jd_k$ represent the two symbols of the DSTBC matrix C (bold) [k] output by the DSTBC coding unit 12. Here, $a_k$ and $c_k$ are the real parts of the symbols of the DSTBC matrix C (bold) [k] corresponding to the k-th block, and $b_k$ and $d_k$ are the imaginary parts of the symbols of the DSTBC matrix C (bold) [k] corresponding to the k-th block.

$$[\text{Formula } 3]$$

$$\mathbf{C}[k] = \begin{bmatrix} a_k + jb_k & c_k + jd_k \\ -c_k + jd_k & a_k - jb_k \end{bmatrix}$$

As expressed by Formula (1), C (bold) [k-1], which is the DSTBC matrix for the previous block, is used to generate the DSTBC matrix C (bold) [k] for the k-th block. Therefore, the DSTBC coding unit 12 holds the generated DSTBC matrix C (bold) [k] until the next block is processed. In the case of the first operation in the DSTBC coding unit 12, the initialization of the block number at the beginning of a transmission frame, or the like, a matrix C (bold) [0] expressed by Formula (4) below is used as the DSTBC matrix C (bold) [k-1] for the previous block. The initial values $a_0+jb_0$ and $c_0+jd_0$ are input from, for example, the outside of the transmitter 10.

$$[\text{Formula } 4]$$

$$\mathbf{C}[0] = \begin{bmatrix} a_0 + jb_0 & c_0 + jd_0 \\ -c_0 + jd_0 & a_0 - jb_0 \end{bmatrix}$$

In Formula (1) above, the DSTBC coding unit 12 performs multiplication and addition/subtraction as matrix operation on all the elements. Alternatively, for example, only two elements, $a_k+jb_k$ and $c_k+jd_k$, may be calculated through

matrix operation, $a_k-jb_k$ may be calculated as the complex conjugate of $a_k+jb_k$, and $-c_k+jd_k$ may be calculated as the sign inverse of the real part of $c_k+jd_k$, so that the amount of operation can be reduced.

Referring back to FIG. 5, after step S2, the code conversion unit 13 performs conversion processing on each element of the DSTBC matrix C (bold) [k] by exchanging real and imaginary parts, exchanging positive/negative signs, or the like to generate a code conversion matrix D (bold) [k] expressed by Formula (5) below (step S3). Then, $e_k+jf_k$ and $m_k+jn_k$ of the code conversion matrix D (bold) [k] are output to the wireless unit 14, and $p_k+jq_k$ and $u_k+jv_k$ are output to the wireless unit 15. Here, $e_k$, $f_k$, $m_k$, $n_k$, $p_k$, $q_k$, $u_k$, and $v_k$ are calculated from $a_k$, $b_k$, $c_k$, and $d_k$ based on the rule described later.

[Formula 5]

$$\mathbf{D}[k] = \begin{bmatrix} e_k + jf_k & p_k + jq_k \\ m_k + jn_k & u_k + jv_k \end{bmatrix}$$

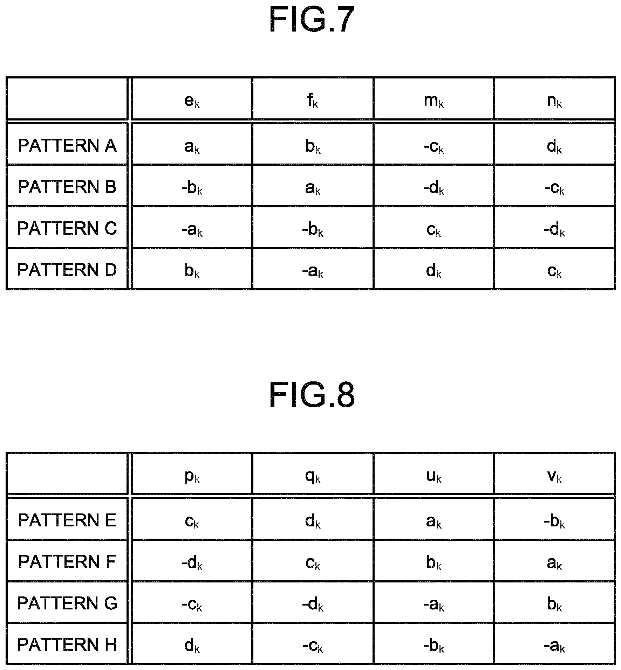

A method of conversion processing in the code conversion unit 13, that is, a rule for calculating $e_k$, $f_k$, $m_k$, $n_k$, $p_k$, $q_k$, $u_k$, and $v_k$ will be described. FIG. 7 is a diagram illustrating an exemplary rule for conversion from $a_k$, $b_k$, $c_k$, and $d_k$ to $e_k$, $f_k$, $m_k$, and $n_k$. As illustrated in FIG. 7, the rule for conversion from $a_k$, $b_k$, $c_k$, and $d_k$ to $e_k$, $f_k$, $m_k$, and $n_k$ includes four patterns: pattern A, pattern B, pattern C, and pattern D. For example, in pattern A, $a_k$ is output as $e_k$ in Formula (5), $b_k$ is output as $f_k$ in Formula (5), $-c_k$ is output as $m_k$ in Formula (5), and $d_k$ is output as $n_k$ in Formula (5). As illustrated in FIG. 7, each of $e_k$ and $f_k$ is any of the values $a_k$, $b_k$, $-a_k$, and $-b_k$, and each of $m_k$ and $n_k$ is any of the values $c_k$, $d_k$, $-c_k$, and $-d_k$.

FIG. 8 is a diagram illustrating an exemplary rule for conversion from $a_k$, $b_k$, $c_k$, and $d_k$ to $p_k$, $q_k$, $u_k$, and $v_k$. As illustrated in FIG. 8, the rule for conversion from $a_k$, $b_k$, $c_k$, and $d_k$ to $p_k$, $q_k$, $u_k$, and $v_k$ includes four patterns: pattern E, pattern F, pattern G, and pattern H. For example, in pattern E, $c_k$ is output as $p_k$ in Formula (5), $d_k$ is output as $q_k$ in Formula (5), $a_k$ is output as $u_k$ in Formula (5), and $-b_k$ is output as $v_k$ in Formula (5). As illustrated in FIG. 8, each of $p_k$ and $q_k$ is any of the values $c_k$, $d_k$, $-c_k$, and $-d_k$, and each of $u_k$ and $v_k$ is any of the values $a_k$, $b_k$, $-a_k$, and $-b_k$.

As illustrated in FIG. 7, patterns A to D indicate performing, on the elements of the first column of the DSTBC matrix C (bold) [k], one or more of the process of outputting real and imaginary parts as they are, the process of exchanging real and imaginary parts, and the process of inverting the positive/negative signs of real or imaginary parts. Specifically, pattern A indicates outputting the real and imaginary parts of the elements of the first column of the DSTBC matrix C (bold) [k] as they are, and pattern B indicates performing, on the elements of the first column of the DSTBC matrix C (bold) [k], the process of inverting the positive/negative signs of the imaginary parts and then exchanging the real and imaginary parts. Pattern C indicates performing, on the elements of the first column of the DSTBC matrix C (bold) [k], the process of inverting the positive/negative signs of the real and imaginary parts. Pattern D indicates performing, on the elements of the first column of the DSTBC matrix C (bold) [k], the process of inverting the positive/negative signs of the real parts and then exchanging the real and imaginary parts. In other words, pattern A indicates a rotation of 0 degrees in the complex plane, pattern B indicates a rotation of 90 degrees in the complex plane, pattern C indicates a rotation of 180 degrees in the complex plane, and pattern D indicates a rotation of 270 degrees in the complex plane.

Similarly, as illustrated in FIG. 8, patterns E to H indicate performing, on the elements of the second column of the DSTBC matrix C (bold) [k], one or more of the process of outputting real and imaginary parts as they are, the process of exchanging real and imaginary parts, and the process of inverting the positive/negative signs of real or imaginary parts. Specifically, pattern E indicates outputting the real and imaginary parts of the elements of the second column of the DSTBC matrix C (bold) [k] as they are, and pattern F indicates performing, on the elements of the second column of the DSTBC matrix C (bold) [k], the process of inverting the positive/negative signs of the imaginary parts and then exchanging the real and imaginary parts. Pattern G indicates performing, on the elements of the second column of the DSTBC matrix C (bold) [k], the process of inverting the positive/negative signs of the real and imaginary parts. Pattern H indicates performing, on the elements of the second column of the DSTBC matrix C (bold) [k], the process of inverting the positive/negative signs of the real parts and then exchanging the real and imaginary parts.

Therefore, because the first and second columns of the code conversion matrix D (bold) [k] are transmitted from the different antennas 16 and 17, the phase difference between the signals that are transmitted from the antennas 16 and 17 varies depending on the combination of patterns selected for the elements of the first and second columns of the DSTBC matrix C (bold) [k]. As described above, each of patterns A to H is information indicating a conversion process for each antenna.

Which of patterns A, B, C, and D is used for conversion from $a_k$, $b_k$, $c_k$, and $d_k$ to $e_k$, $f_k$, $m_k$, and $n_k$ is specified by a first selection signal input from the outside. Which of patterns E, F, G, and H is used for conversion from $a_k$, $b_k$, $c_k$, and $d_k$ to $p_k$, $q_k$, $u_k$, and $v_k$ is specified by a second selection signal input from the outside. A method of specifying patterns with the first selection signal and the second selection signal will be described later.

In this manner, which pattern is used for conversion from $a_k$, $b_k$, $c_k$, and $d_k$ to $e_k$, $f_k$, $m_k$, and $n_k$ and which pattern is used for conversion from $a_k$, $b_k$, $c_k$, and $d_k$ to $p_k$, $q_k$, $u_k$, and $v_k$ are individually selected. That is, for each antenna corresponding to coded symbols, i.e. symbols subjected to DSTBC coding, that is, for each antenna to which coded symbols, i.e. symbols subjected to DSTBC coding, are transmitted, the conversion process to be performed on the coded symbols is selected. Specifically, the four patterns are defined for each antenna, whereby the four conversion processes are defined in advance for each antenna. The code conversion unit 13 performs, on the coded symbols, a conversion process selected from among the four conversion processes corresponding to each antenna. The four conversion processes include the process of outputting the coded symbols as they are, the process of inverting the positive/negative signs of the imaginary parts of the coded symbols and then exchanging the real and imaginary parts, the process of inverting the positive/negative signs of the real and imaginary parts of the coded symbols, and the process of inverting the positive/negative signs of the real parts and then exchanging the real and imaginary parts.

Referring back to FIG. 5, after step S3, the transmitter 10 transmits the signals converted by the code conversion unit 13 (step S4). Specifically, the wireless units 14 and 15 perform transmission processing on the signals input from the code conversion unit 13, and transmit the signals subjected to transmission processing through the antennas 16 and 17. In the example described in the present embodiment, the two transmission antennas are used to achieve transmission diversity using the DSTBC scheme. However, the present embodiment can be applied to the case where only one transmission antenna is used. In this case, either $e_k+jf_k$ and $m_k+jn_k$ or $p_k+jq_k$ and $u_k+jv_k$ is transmitted from the transmission antenna.

Next, the operation of the receiver 20 of the present embodiment for receiving a signal from the transmitter 10 will be described. First, the antenna 21 of the receiver 20 receives a signal from the transmitter 10, and outputs the received signal to the wireless unit 22.

The wireless unit 22 performs reception processing on the reception signal input from the antenna 21, and outputs the signal subjected to reception processing to the DSTBC decoding unit 23. The DSTBC decoding unit 23 generates a reception symbol matrix R (bold) [k] from the signal input from the wireless unit 22 using two symbols as one block. Specifically, the reception symbol matrix R (bold) [k] is generated using Formula (6) below, where $r_{1,k}+jr_{2,k}$ and $r_{3,k}+jr_{4,k}$ are the two symbols of the k-th block input from the wireless unit 22.

$$[\text{Formula } 6]$$

$$\mathbf{R}[k] = \begin{bmatrix} r_{1,k} + jr_{2,k} & r_{3,k} + jr_{4,k} \\ r_{3,k} - jr_{4,k} & -r_{1,k} - jr_{2,k} \end{bmatrix}$$

Next, as expressed by Formula (7) below, the DSTBC decoding unit 23 multiplies the reception symbol matrix R (bold) [k] and an adjoint matrix R (bold)$^H$ [k-1] of a reception symbol matrix R (bold) [k-1] for the previous block to generate an estimated symbol matrix S (bold) (hat) [k], and outputs the estimated symbol matrix S (bold) (hat) [k] to the demapping unit 24.

$$[\text{Formula } 7]$$

$$\hat{\mathbf{S}}[k] = \frac{1}{\left| r_{1,k-1} + jr_{2,k-1} \right|^2 + \left| r_{3,k-1} + jr_{4,k-1} \right|^2} \mathbf{R}[k]\mathbf{R}^{H}[k-1]$$

When the estimated symbols corresponding to $x_k+jy_k$ and $z_k+jw_k$ are respectively expressed by Formulas (8) and (9) below, the estimated symbol matrix S (bold) (hat) [k] can be expressed by Formula (10) below.

$$[\text{Formula } 8]$$

$$\hat{x}_k + j\hat{y}_k$$

$$[\text{Formula } 9]$$

$$\hat{z}_k + j\hat{w}_k$$

[Formula 10]

$$\hat{\mathbf{S}}[k] = \begin{bmatrix} \hat{x}_k + j\hat{y}_k & \hat{z}_k + j\hat{w}_k \\ -\hat{z}_k + j\hat{w}_k & \hat{x} - j\hat{y}_k \end{bmatrix}$$

Here, the DSTBC decoding unit 23 calculates the estimated symbol matrix S (bold) (hat) [k], that is, Formulas (8) and (9) above, using the reception symbol matrix for the previous block, as expressed by Formula (7). Therefore, the DSTBC decoding unit 23 holds the reception symbol matrix R (bold) [k] until the next block is processed.

In Formula (7) above, multiplication and addition/subtraction are performed as matrix operation on all the elements. Alternatively, for example, only two elements, Formulas (8) and (9) above, may be calculated through matrix operation, and the other elements may be obtained using the complex conjugate, the sign inverse, or the like, so that the amount of operation can be reduced.

On the estimated symbols input from the DSTBC decoding unit 23, that is, the two symbols expressed by Formulas (8) and (9) above, the demapping unit 24 performs demapping for converting complex numbers to bit values, and outputs the bit values obtained through demapping as a reception bit sequence. For example, in a case where the mapping unit 11 of the transmitter 10 uses QPSK, the demapping unit 24 outputs two bits (0, 0) if each of the symbol x (hat)$_k$+jy (hat)$_k$ and the symbol z (hat)$_k$+jw (hat)$_k$ is included in the first quadrant of the complex plane, and outputs two bits (1, 0) if each of the symbol x (hat)$_k$+jy (hat)$_k$ and the symbol z (hat)k+jw (hat)$_k$ is included in the second quadrant of the complex plane. The demapping unit 24 outputs two bits (1, 1) if each of the symbol x (hat)$_k$+jy (hat)$_k$ and the symbol z (hat)$_k$+jw (hat)$_k$ is included in the third quadrant of the complex plane, and outputs two bits (0, 1) if each of the symbol x (hat)$_k$+jy (hat)$_k$ and the symbol z (hat)$_k$+jw (hat)$_k$ is included in the fourth quadrant of the complex plane.

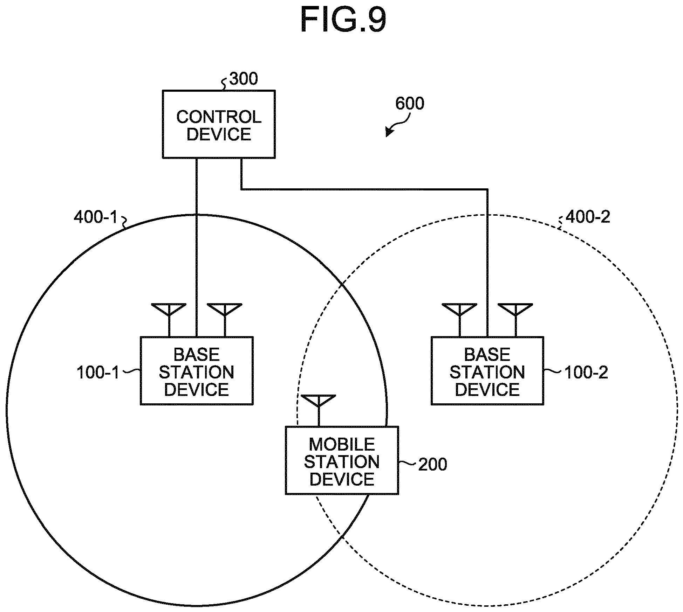

Next, an example of a wireless communication system including the transmitter 10 and the receiver 20 according to the present embodiment will be described. FIG. 9 is a diagram illustrating an example of a wireless communication system according to the present embodiment. The wireless communication system 600 includes base station devices 100-1 and 100-2, a mobile station device 200, and a control device 300.

Each of the base station devices 100-1 and 100-2 includes the transmitter 10, and the mobile station device 200 includes the receiver 20. The control device 300 controls the base station devices 100-1 and 100-2. A coverage area 400-1 indicates the range in which the base station device 100-1 and the mobile station device 200 can communicate. A coverage area 400-2 indicates the range in which the base station device 100-2 and the mobile station device 200 can communicate. The coverage area 400-1 and the coverage area 400-2 partially overlap each other. When the mobile station device 200 is located in the overlap between the coverage area 400-1 and the coverage area 400-2, the mobile station device 200 can receive signals from both the base station device 100-1 and the base station device 100-2. Hereinafter, the base station devices 100-1 and 100-2 will be referred to as the base station device 100 when they are not distinguished from each other. Although the two base station devices 100 and the one mobile station device 200 are illustrated in FIG. 9, the number of base station devices 100 and the number of mobile station devices 200 are not limited to this example.

Next, the operation of the wireless communication system 600 illustrated in FIG. 9 will be described. The control device 300 transmits a transmission bit sequence to each transmitter 10, that is, each of the base station devices 100-1 and 100-2. The control device 300 also transmits the first selection signal and the second selection signal to each transmitter 10, that is, each of the base station devices 100-1 and 100-2. The control device 300 transmits, to the base station device 100, a signal indicating the conversion process to be selected in the code conversion unit 13. In each of the base station devices 100-1 and 100-2, the first selection signal and the second selection signal received from the control device 300 are input to the code conversion unit 13 of the transmitter 10. Note that the control device 300 may also transmit the above-described initial values $a_0+jb_0$ and $c_0+jd_0$ to each of the base station devices 100-1 and 100-2. The transmission bit sequence transmitted by the control device 300 to the base station device 100-1 and the transmission bit sequence transmitted by the control device 300 to the base station device 100-2 are the same. Note that the transmission bit sequence does not have to be transmitted from the control device 300, and the transmission bit sequence may be generated in the base station device 100 in part or in whole.

On the other hand, the first selection signal and the second selection signal transmitted by the control device 300 to the base station device 100-1, and the first selection signal and the second selection signal transmitted by the control device 300 to the base station device 100-2 are not the same. Specifically, the combination of the first and second selection signals transmitted by the control device 300 to the base station device 100-1, is different from the combination of the first and second selection signals transmitted by the control device 300 to the base station device 100-2. A method of selecting the first selection signal and the second selection signal that the control device 300 transmits to each base station device 100 will be described later.

The mobile station device 200 receives transmission signals from the base station devices 100-1 and 100-2, and processes the received signals using the operation of the receiver 20 described above to obtain reception bit sequences.

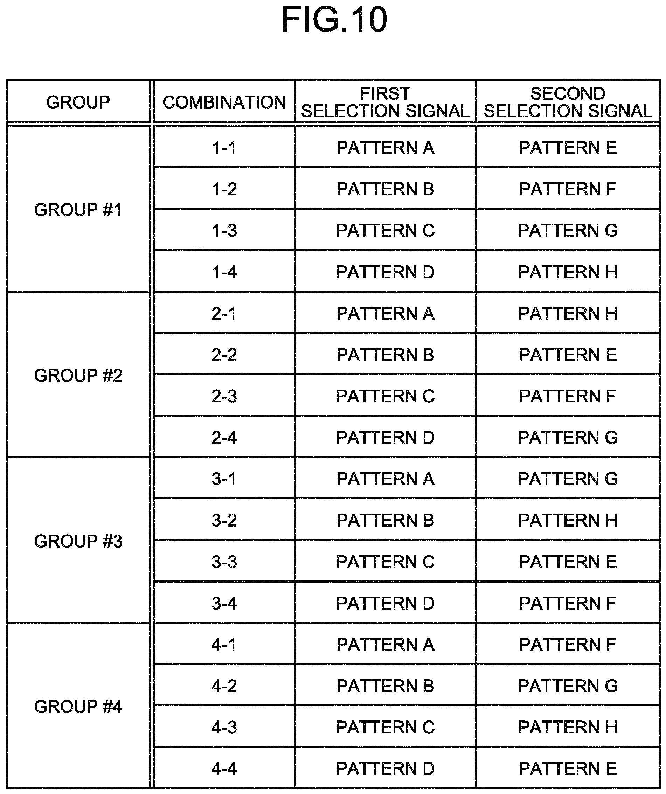

Here, a method of selecting the first selection signal and the second selection signal that the control device 300 transmits to each base station device 100, that is, a method of selecting each pattern illustrated in FIGS. 7 and 8 for use in the base station device 100 will be described. FIG. 10 is a diagram illustrating an example of pattern grouping according to the present embodiment. In the example illustrated in FIG. 10, the combinations of the first and second selection signals are divided into four groups.

Group #1 includes four combinations 1-1 to 1-4. Combination 1-1 is a combination in which the first selection signal indicates pattern A and the second selection signal indicates pattern E. Combination 1-2 is a combination in which the first selection signal indicates pattern B and the second selection signal indicates pattern F. Combination 1-3 is a combination in which the first selection signal indicates pattern C and the second selection signal indicates pattern G. Combination 1-4 is a combination in which the first selection signal indicates pattern D and the second selection signal indicates pattern H. That is, the combinations in group #1 indicate that the process for the elements of the first column of the DSTBC matrix C (bold) [k] is the same as the process for the elements of the second column of the DSTBC matrix C (bold) [k] .

Group #2 includes four combinations 2-1 to 2-4. Combination 2-1 is a combination in which the first selection signal indicates pattern A and the second selection signal indicates pattern H. Combination 2-2 is a combination in which the first selection signal indicates pattern B and the second selection signal indicates pattern E. Combination 2-3 is a combination in which the first selection signal indicates pattern C and the second selection signal indicates pattern F. Combination 2-4 is a combination in which the first selection signal indicates pattern D and the second selection signal indicates pattern G. That is, the combinations in group #2 indicate that patterns E to H are cyclically shifted one by one while patterns A to D are fixed with respect to the combinations in group #1.

Group #3 includes four combinations 3-1 to 3-4. Combination 3-1 is a combination in which the first selection signal indicates pattern A and the second selection signal indicates pattern G. Combination 3-2 is a combination in which the first selection signal indicates pattern B and the second selection signal indicates pattern H. Combination 3-3 is a combination in which the first selection signal indicates pattern C and the second selection signal indicates pattern E. Combination 3-4 is a combination in which the first selection signal indicates pattern D and the second selection signal indicates pattern F. That is, the combinations in group #3 indicate that patterns E to H are cyclically shifted one by one while patterns A to D are fixed with respect to the combinations in group #2.

Group #4 includes four combinations 4-1 to 4-4. Combination 4-1 is a combination in which the first selection signal indicates pattern A and the second selection signal indicates pattern F. Combination 4-2 is a combination in which the first selection signal indicates pattern B and the second selection signal indicates pattern G. Combination 4-3 is a combination in which the first selection signal indicates pattern C and the second selection signal indicates pattern H. Combination 4-4 is a combination in which the first selection signal indicates pattern D and the second selection signal indicates pattern E. That is, the combinations in group #4 indicate that patterns E to H are cyclically shifted one by one while patterns A to E are fixed with respect to the combinations in group #3.

As illustrated in FIG. 10, the combinations of items of information indicating a conversion process for each of the plurality of antennas are grouped into the four groups according to the phase difference between the signals that are transmitted from the antennas 16 and 17. The control device 300 assigns combinations that belong to different groups to the base station devices 100-1 and 100-2 with overlapping coverage areas, and determines the conversion processes corresponding to the antennas 16 and 17 of the base station devices 100 based on the assigned combinations.

The control device 300 selects combinations of patterns, making sure that the combinations of patterns selected for the base station device 100-1 and the base station device 100-2 belong to different groups. For example, when combination 1-1 in group #1 is selected for the base station device 100-1, a combination that belongs to a group other than group #1, e.g. combination 2-1 in group #2, is selected for the base station device 100-2.

Next, the power of signals received by the mobile station device 200 will be described. Beat interference in the mobile station device 200 mainly occurs when the mobile station device 200 receives direct waves of equal level from the two base station devices 100-1 and 100-2. That is, beat interference mainly occurs when the mobile station device 200 exists at a position where the mobile station device 200 can directly receive signals from the two base station devices 100-1 and 100-2, that is, when the mobile station device 200 exists at a line-of-sight position between the base station devices 100-1 and 100-2. Because each of the base station devices 100-1 and 100-2 transmits signals through two antennas, the mobile station device 200 receives direct waves from a total of four antennas. When signals are transmitted from the two antennas of one base station device 100 and received as direct waves at the mobile station device 200, the phase difference between these received signals is almost the same as the phase difference between the signals transmitted from the two antennas of the base station device 100. On the other hand, when signals are transmitted from different base station devices 100 and received as direct waves at the mobile station device 200, the phase difference between these received signals varies depending on the distance between the mobile station device 200 and each base station device 100. Therefore, when the phase difference between the direct waves received at the mobile station device 200 from the different base station devices 100 is 180 degrees, that is, antiphase, beat interference occurs. If the phase difference between signals from the two antennas of one base station device 100 is equal to the phase difference between signals from the two antennas of another base station device 100, beat interference occurs in both signals transmitted from the two antennas. Therefore, in the present embodiment, the phase difference between signals from the two antennas of the base station device 100-1 and the phase difference between signals from the two antennas of the base station device 100-2 differ, which can prevent both signals transmitted from the two transmission antennas from being received in an antiphase manner at the mobile station device 200, in other words, prevent beat interference.

Hereinafter, a case in which the control device 300 selects combination 1-1 illustrated in FIG. 10 as a combination corresponding to the base station device 100-1 and selects combination 3-4 illustrated in FIG. 10 as a combination corresponding to the base station device 100-2 will be described as an example. In this case, the signal representing pattern A is input as the first selection signal and the signal representing pattern E is input as the second selection signal to the code conversion unit 13 in the transmitter 10 of the base station device 100-1. The signal representing pattern D is input as the first selection signal and the signal representing pattern F is input as the second selection signal to the code conversion unit 13 in the transmitter 10 of the base station device 100-2.

Suppose the code conversion matrices that are transmitted from the transmitters 10 of the base station devices 100-1 and 100-2 are D (bold)$_1$ [k] and D (bold)$_2$ [k], respectively. In this case, the code conversion matrices D (bold)$_1$ [k] and D (bold)$_2$ [k] are expressed by Formulas (11) and (12) below using $a_k$, $jb_k$, $c_k$, and $jd_k$.

[Formula 11]

$$\mathbf{D}_1[k] = \begin{bmatrix} a_k + jb_k & c_k + jd_k \\ -c_k + jd_k & a_k - jb_k \end{bmatrix}$$

[Formula 12]

$$\mathbf{D}_2[k] = \begin{bmatrix} b_k - ja_k & -d_k + jc_k \\ d_k + jc_k & b_k + ja_k \end{bmatrix}$$

Suppose transmission path information indicating the transmission path between the antenna 16 and the antenna 21 of the mobile station device 200 and transmission path information indicating the transmission path between the antenna 17 and the antenna 21 of the mobile station device 200 for transmitting the code conversion matrix D (bold)$_1$ [k] from the base station device 100-1 are respectively $h_{1,k}+jh_{2,k}$ and $h_{3,k}+jh_{4,k}$. Then, suppose transmission path information about the antenna 16 and the antenna 21 of the mobile station device 200 and transmission path information about the antenna 17 and the antenna 21 of the mobile station device 200 for transmitting the code conversion matrix D (bold)$_2$ [k] from the base station device 100-2 are respectively $g_{1,k}+jg_{2,k}$ and $g_{3,k}+jg_{4,k}$. A transmission path vector H (bold) [k] between the base station device 100-1 and the mobile station device 200, and a transmission path vector G (bold) [k] between the base station device 100-2 and the mobile station device 200, are respectively expressed by Formulas (13) and (14) below. It is assumed that fluctuations of transmission path information in a block can be ignored.

[Formula 13]

$$\mathbf{H}[k] = \begin{bmatrix} h_{1,k} + jh_{2,k} \\ h_{3,k} + jh_{4,k} \end{bmatrix}$$

[Formula 14]

$$\mathbf{G}[k] = \begin{bmatrix} g_{1,k} + jg_{2,k} \\ g_{3,k} + jg_{4,k} \end{bmatrix}$$

The reception symbol matrix R (bold) [k] generated by the DSTBC decoding unit 23 of the receiver 20 of the mobile station device 200 is expressed by Formula (15) below using the code conversion matrix D (bold)$_1$ [k], the code conversion matrix D (bold)$_2$ [k], the transmission path vector H (bold) [k], and the transmission path vector G (bold) [k]. It is assumed that the noise is so small that it can be ignored.

[Formula 15]

$$\mathbf{R}[k] = \mathbf{D}_1[k]\mathbf{H}[k] + \mathbf{D}_2[k]\mathbf{G}[k]$$

$$= \begin{bmatrix} a_k + jb_k & c_k + jd_k \\ -c_k + jd_k & a_k - jb_k \end{bmatrix}\begin{bmatrix} h_{1,k} + jh_{2,k} \\ h_{3,k} + jh_{4,k} \end{bmatrix} + \begin{bmatrix} b_k - ja_k & -d_k + jc_k \\ d_k + jc_k & b_k + ja_k \end{bmatrix}\begin{bmatrix} g_{1,k} + jg_{2,k} \\ g_{3,k} + jg_{4,k} \end{bmatrix}$$

Here, if it is assumed that fluctuations of transmission path information can be ignored between the k-th block and the (k+1)-th block, Formula (15) can be modified as expressed by Formula (16) below.

[Formula 16]

$$\mathbf{R}[k] = \hat{\mathbf{S}}[k]\mathbf{R}[k-1]$$

By expanding Formula (16), Formula (17) is obtained as follows.

[Formula 17]

$$\hat{\mathbf{S}}[k] = \frac{1}{\left| r_{1,k-1} + jr_{2,k-1} \right|^2 + \left| r_{3,k-1} + jr_{4,k-1} \right|^2} \mathbf{R}[k]\mathbf{R}^H[k-1]$$

As described above, when the code conversion matrices D (bold)$_1$ [k] and D (bold)$_2$ [k] are transmitted from the base station devices 100-1 and 100-2, respectively, the mobile station device 200 can obtain estimate values of the modulation symbols $x_k+jy_k$ and $z_k+jw_k$ using Formula (17) above. Formula (17) is the same as Formula (7) described above, and the mobile station device 200 can obtain estimated values of the modulation symbols $x_k+jy_k$ and $z_k+jw_k$ using the general DSTBC decoding technique.

The conversion processing in each base station device 100, that is, each transmitter 10, described above with reference to FIGS. 7, 8, and 10 is an example. The conversion processing is not limited to this example, and any type of conversion processing that causes the base station devices with overlapping coverage areas to produce different phase differences between signals from two antennas achieves the above-mentioned effects. In a case where there are three or more base station devices 100, the conversion method only needs to be set such that the adjacent base station devices 100, that is, the base station devices 100 with overlapping coverage areas, produce different phase differences between signals from two antennas, and the base station devices 100 whose coverage areas do not overlap each other may produce the same phase difference or different phase differences between signals from two antennas. In a case where the coverage areas of three or more base station devices 100 overlap each other, these three or more base station devices 100 only need to produce phase differences between signals from two antennas to be different with each other. That is, combinations of the first and second selection signals may be freely selected for the three or more base station devices 100 as long as the selected combinations belong to different groups as described above with reference to FIG. 10.

As described above, in the transmitters 10 of the base station devices 100, conversion processing is performed on the transmission symbols that have been subjected to DSTBC coding. Because the base station devices 100 perform different types of conversion processing with each other, the base station devices 100 produce different phase differences between signals from two transmission antennas. The conversion processing includes exchange of real and imaginary parts and exchange of positive/negative signs. Thus, when transmission signals from the plurality of base station devices 100 are combined and received at the mobile station device 200, beat interference can be prevented. In addition, because signals from the transmitters 10 of the base station devices 100 can be received simply using general DSTBC decoding, a receiver that performs general DSTBC reception can be used as the receiver 20 without any additional process.

Second Embodiment.

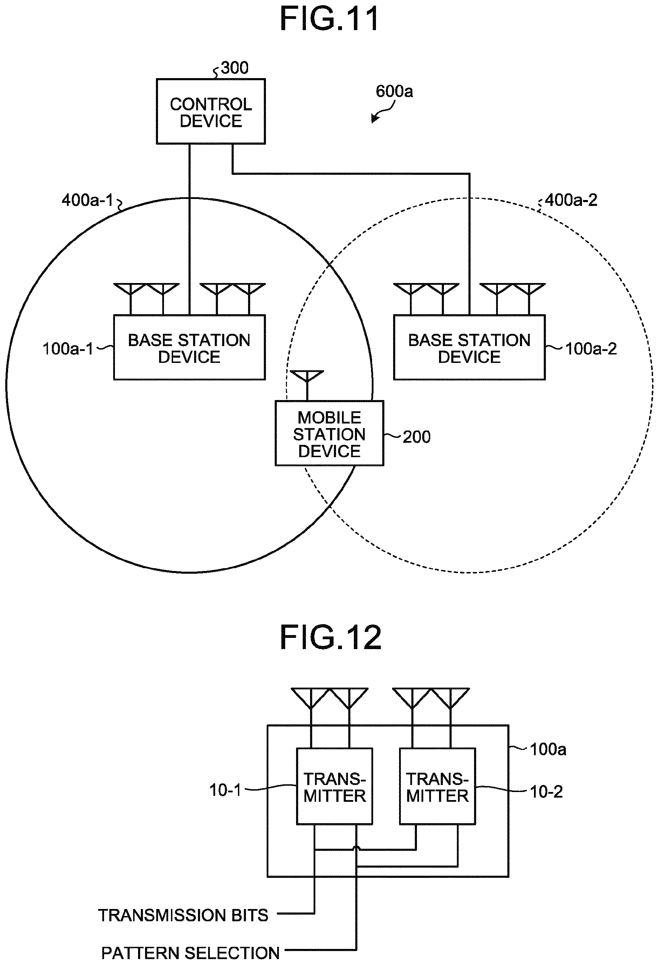

FIG. 11 is a diagram illustrating an exemplary configuration of a wireless communication system according to the second embodiment of the present invention. The wireless communication system 600a of the present embodiment includes base station devices 100a-1 and 100a-2, the mobile station device 200, and the control device 300. The configuration and operation of the mobile station device 200 are the same as those in the first embodiment. Hereinafter, components having the same functions as those in the first embodiment are denoted by the same reference signs as those in the first embodiment, and redundant explanations are omitted. Hereinafter, differences from the first embodiment will be mainly described.

Each of the base station devices 100a-1 and 100a-2 includes four antennas. A coverage area 400a-1 indicates the range in which the base station device 100a-1 and the mobile station device 200 can communicate. A coverage area 400a-2 indicates the range in which the base station device 100a-2 and the mobile station device 200 can communicate. The coverage area 400a-1 and the coverage area 400a-2 partially overlap each other. Hereinafter, the base station devices 100a-1 and 100a-2 will be referred to as the base station device 100a when they are not distinguished from each other.

FIG. 12 is a diagram illustrating an exemplary configuration of the base station device 100a according to the present embodiment. The base station device 100a includes a transmitter 10-1 and a transmitter 10-2. Each of the transmitter 10-1 and the transmitter 10-2 is the transmitter 10 according to the first embodiment. That is, the base station device 100a includes two transmitters 10 of the first embodiment.

The control device 300 controls the base station devices 100a-1 and 100a-2. The control device 300 transmits a transmission bit sequence to each transmitter 10 as in the first embodiment. The control device 300 also transmits the first selection signal and the second selection signal to each transmitter 10 as in the first embodiment. However, in the present embodiment, because each base station device 100a includes the two transmitters 10, two sets of the first and second selection signals are transmitted to one base station device 100a. As in the first embodiment, the transmission bit sequence may be generated in the base station device 100a in part or in whole.

In the present embodiment, the control device 300 selects combinations of the first and second selection signals for the transmitters 10 such that the combinations selected for the transmitters 10 belong to different ones of the groups illustrated in FIG. 10. That is, the control device 300 assigns combinations that belong to different groups to the transmitters 10-1 and 10-2 of the base station devices 100a-1 and 100a-2 with overlapping coverage areas, that is, a total of four transmitters 10, and determines the conversion processes corresponding to the antennas of the base station devices based on the assigned combinations. Therefore, the combinations of the first and second selection signals transmitted to a total of four transmitters 10, namely the transmitters 10-1 and 10-2 of the base station device 100a-1 and the transmitters 10-1 and 10-2 of the base station device 100a-2, belong to different groups.

For example, the control device 300 selects combination 1-1 in group #1 illustrated in FIG. 10 for the transmitter 10-1 of the base station device 100a-1, and selects combination 2-1 in group #2 illustrated in FIG. 10 for the transmitter 10-2 of the base station device 100a-1. Further, the control device 300 selects combination 3-1 in group #3 illustrated in FIG. 10 for the transmitter 10-1 of the base station device 100a-2, and selects combination 4-1 in group #4 illustrated in FIG. 10 for the transmitter 10-2 of the base station device 100a-2.

Consequently, the mobile station device 200 can prevent antiphase reception of both signals from the two antennas of each transmitter 10. Therefore, as in the first embodiment, beat interference can be prevented. Although the total number of antennas in the base station device 100a is four, because the base station device 100a includes the two transmitters 10 each including two antennas, the operation of each transmitter 10 is the same as that in the first embodiment. For this reason, it is not necessary to implement the process of DSTBC operation for the case of four antennas in the base station device 100a.

As in the first embodiment, the receiver 20 according to the present embodiment only needs to perform DSTBC decoding corresponding to the case where the number of antennas in the transmitter 10 is two. It is not necessary to implement, in the receiver 20, the process of DSTBC operation for the case where the number of antennas in the transmitter 10 is four. Therefore, while preventing an increase in the amount of processing, the receiver 20 can obtain transmission diversity gain from the four transmission antennas, that is, the gain obtained through the combination of signals from the four antennas.

The configurations described in the above-mentioned embodiments indicate examples of the contents of the present invention. The configurations can be combined with another well-known technique, and some of the configurations can be omitted or changed in a range not departing from the gist of the present invention.

Reference Signs List

10, 10-1, 10-2 transmitter: 11 mapping unit: 12 DSTBC coding unit: 13 code conversion unit: 14, 15, 22 wireless unit: 16, 17, 21 antenna: 20 receiver: 23 DSTBC decoding unit: 24 demapping unit: 100-1, 100-2, 100a, 100a-1, 100a-2 base station device: 200 mobile station device: 300 control device.

**Claims**

**1.** A transmitter comprising:

a modulation unit to generate modulation symbols by modulating a transmission bit sequence;

a coding unit to generate coded symbols by performing differential space-time block coding on the modulation symbols;
a conversion unit to perform, on the coded symbols, a conversion process selected from among a plurality of conversion processes; and
an antenna to transmit the coded symbols after the conversion process.

2. The transmitter according to claim 1, wherein
a plurality of the antennas is provided, and
the conversion process to be performed on the coded symbols is selected for each of the antennas corresponding to the coded symbols.

3. The transmitter according to claim 2, wherein
four conversion processes are defined in advance for each of the antennas, and
the conversion unit performs, on the coded symbols, a conversion process selected from among the four conversion processes corresponding to each of the antennas.

4. The transmitter according to claim 3, wherein
the four conversion processes are a process of outputting the coded symbols as they are, a process of inverting positive/negative signs of imaginary parts of the coded symbols and then exchanging real and imaginary parts, a process of inverting positive/negative signs of real and imaginary parts of the coded symbols, and a process of inverting positive/negative signs of real parts of the coded symbols and then exchanging real and imaginary parts.

5. A base station device comprising the transmitter according to any one of claims 1 to 4.

6. The base station device according to claim 5, comprising two transmitters.

7. A wireless communication system comprising a base station device and a control device to control the base station device, the base station device including a transmitter, the transmitter including:

a modulation unit to generate modulation symbols by modulating a transmission bit sequence;
a coding unit to generate coded symbols by performing differential space-time block coding on the modulation symbols;
a conversion unit to perform, on the coded symbols, a conversion process selected from among a plurality of conversion processes; and
an antenna to transmit the coded symbols after the conversion process, wherein
the control device transmits, to the base station device, a signal indicating the conversion process to be selected in the conversion unit.

8. The wireless communication system according to claim 7, wherein
a plurality of the antennas is provided, and
the control device determines, for each of a plurality of the base station devices with overlapping coverage areas, the conversion process to be selected in the conversion unit such that the base station devices produce different phase differences between the coded symbols after the conversion process that are to be transmitted from the plurality of antennas.

9. The wireless communication system according to claim 8, wherein
the control device determines, for each of the antennas, the conversion process to be performed on the coded symbols.

10. The wireless communication system according to claim 9, wherein
four conversion processes are defined in advance for each of the antennas, and
the control device determines the conversion process corresponding to each of the antennas from among the four conversion processes corresponding to each of the antennas.

11. The wireless communication system according to claim 10, wherein
the four conversion processes are a process of outputting the coded symbols as they are, a process of inverting positive/negative signs of imaginary parts of the coded symbols and then exchanging real and imaginary parts, a process of inverting positive/negative signs of real and imaginary parts of the coded symbols, and a process of inverting positive/negative signs of real parts of the coded symbols and then exchanging real and imaginary parts.

12. The wireless communication system according to any one of claims 8 to 11, wherein
   combinations of items of information indicating the conversion process for each of the plurality of antennas are grouped into four groups according to the phase differences, and
   the control device assigns combinations that belong to different ones of the groups to the base station devices with the overlapping coverage areas, and determines the conversion processes corresponding to the antennas of the base station devices based on the assigned combinations.

13. The wireless communication system according to any one of claims 8 to 11, wherein
   the base station devices each include a plurality of the transmitters.

14. The wireless communication system according to claim 13, wherein
   combinations of items of information indicating the conversion process for each of the plurality of antennas are grouped into four groups according to the phase differences, and
   the control device assigns combinations that belong to different ones of the groups to the transmitters of the base station devices with the overlapping coverage areas, and determines the conversion processes corresponding to the antennas of the base station devices based on the assigned combinations.

# FIG.1

INITIAL VALUE $a_0+jb_0$

INITIAL VALUE $c_0+jd_0$

10

TRANSMIS-
SION BIT
SEQUENCE

MAPPING
UNIT
11

DSTBC
CODING
UNIT
12

CODE
CONVER-
SION UNIT
13

WIRELESS
UNIT
14

16

WIRELESS
UNIT
15

17

FIRST SELECTION SIGNAL

SECOND SELECTION SIGNAL

# FIG.2

20

21

WIRELESS
UNIT
22

DSTBC
DECODING
UNIT
23

DEMAPPING
UNIT
24

RECEPTION BIT
SEQUENCE

# FIG.3

500

┌─────────────────┐
│   PROCESSING    │
│    CIRCUITRY    │
└─────────────────┘

# FIG.4

503

501                          502

┌─────────────────┐    ┌─────────────────┐
│    PROCESSOR    │    │     MEMORY      │
└─────────────────┘    └─────────────────┘

# FIG.5

```
        ┌──────────────┐
        │    START     │
        └──────┬───────┘
               │          ⟋S1
        ┌──────▼───────────┐
        │     MAPPING      │
        └──────┬───────────┘
               │          ⟋S2
        ┌──────▼───────────────────┐
        │  DSTBC MATRIX GENERATION  │
        └──────┬───────────────────┘
               │          ⟋S3
        ┌──────▼───────────────┐
        │   CODE CONVERSION     │
        └──────┬───────────────┘
               │          ⟋S4
        ┌──────▼───────────────┐
        │    TRANSMISSION       │
        └──────┬───────────────┘
               │
        ┌──────▼───────┐
        │     END      │
        └──────────────┘
```

# FIG.6

IMAGINARY AXIS

A:(1,0)          A:(0,0)

REAL AXIS

A:(1,1)          A:(0,1)

# FIG.7

|  | $e_k$ | $f_k$ | $m_k$ | $n_k$ |
|---|---|---|---|---|
| PATTERN A | $a_k$ | $b_k$ | $-c_k$ | $d_k$ |
| PATTERN B | $-b_k$ | $a_k$ | $-d_k$ | $-c_k$ |
| PATTERN C | $-a_k$ | $-b_k$ | $c_k$ | $-d_k$ |
| PATTERN D | $b_k$ | $-a_k$ | $d_k$ | $c_k$ |

# FIG.8

|  | $p_k$ | $q_k$ | $u_k$ | $v_k$ |
|---|---|---|---|---|
| PATTERN E | $c_k$ | $d_k$ | $a_k$ | $-b_k$ |
| PATTERN F | $-d_k$ | $c_k$ | $b_k$ | $a_k$ |
| PATTERN G | $-c_k$ | $-d_k$ | $-a_k$ | $b_k$ |
| PATTERN H | $d_k$ | $-c_k$ | $-b_k$ | $-a_k$ |

# FIG.9

# FIG.10

| GROUP | COMBINATION | FIRST SELECTION SIGNAL | SECOND SELECTION SIGNAL |
|---|---|---|---|
| GROUP #1 | 1-1 | PATTERN A | PATTERN E |
| | 1-2 | PATTERN B | PATTERN F |
| | 1-3 | PATTERN C | PATTERN G |
| | 1-4 | PATTERN D | PATTERN H |
| GROUP #2 | 2-1 | PATTERN A | PATTERN H |
| | 2-2 | PATTERN B | PATTERN E |
| | 2-3 | PATTERN C | PATTERN F |
| | 2-4 | PATTERN D | PATTERN G |
| GROUP #3 | 3-1 | PATTERN A | PATTERN G |
| | 3-2 | PATTERN B | PATTERN H |
| | 3-3 | PATTERN C | PATTERN E |
| | 3-4 | PATTERN D | PATTERN F |
| GROUP #4 | 4-1 | PATTERN A | PATTERN F |
| | 4-2 | PATTERN B | PATTERN G |
| | 4-3 | PATTERN C | PATTERN H |
| | 4-4 | PATTERN D | PATTERN E |

# FIG.11

# FIG.12

TRANSMISSION BITS

PATTERN SELECTION

## INTERNATIONAL SEARCH REPORT

| International application No. |
| --- |
| PCT/JP2017/017692 |

**A. CLASSIFICATION OF SUBJECT MATTER**
*H04L1/06*(2006.01)i, *H04L27/233*(2006.01)i

According to International Patent Classification (IPC) or to both national classification and IPC

**B. FIELDS SEARCHED**

Minimum documentation searched (classification system followed by classification symbols)
H04L1/06, H04L27/233

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | WO 2011/125329 A1 (Hitachi Kokusai Electric Inc.),<br>13 October 2011 (13.10.2011),<br>paragraphs [0022] to [0035]; fig. 1<br>& US 2013/0022058 A1<br>paragraphs [0068] to [0096]; fig. 1 | 1,5-7,13<br>2-4,8-12,14 |
| A | WO 2015/045072 A1 (Hitachi Kokusai Electric Inc.),<br>02 April 2015 (02.04.2015),<br>& US 2016/0233984 A1 | 1-14 |
| A | JP 2016-106479 A (Mitsubishi Electric Corp.),<br>16 June 2016 (16.06.2016),<br>(Family: none) | 1-14 |

| ☒ Further documents are listed in the continuation of Box C. | ☐ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 21 July 2017 (21.07.17) | 01 August 2017 (01.08.17) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/017692

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-091501 A  (Mitsubishi Electric Corp.), 06 May 2011 (06.05.2011), (Family: none) | 1-14 |
| A | JP 2010-200249 A  (Sharp Corp.), 09 September 2010 (09.09.2010), (Family: none) | 1-14 |
| A | Hiroyasu SANO, Shinji MASUDA, Fumio ISHIZU, "A Study on Code Multiplexing Scheme for Differential Space-Time Block Coding", 2012 Nen IEICE Communications Society Conference Koen Ronbunshu 1, 14 September 2012 (14.09.2012), page 387 | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. TAROKH ; H. JAFARKHANI.** A Differential Detection Scheme for Transmit Diversity. *IEEE Journal on Selected Areas in Communications,* July 2000, vol. 18, 1169-1174